# EUROPÄISCHE PATENTANMELDUNG

(11) **EP 1 935 507 A2**
(43) Veröffentlichungstag der Anmeldung: **25.06.2008**
(21) Anmeldenummer: 07024482.7
(22) Anmeldetag: 18.12.2007
(51) Int. Cl.: B05C 17/005, B60S 1/08

(54) **Reparaturset zur Ausbildung eines Gelpads**

(30) Priorität: 21.12.2006 DE 102006060589
(71) Anmelder: Savidis, Anestis, 72119 Ammerbuch-Altingen (DE); Trobec, Franci, 3230 Sentjur pri Celju (SI)
(72) Erfinder: Savidis, Anestis, 72119 Ammerbuch-Altingen (DE); Trobec, Franci, 3230 Sentjur pri Celju (SI)
(74) Vertreter: Kohler Schmid Möbus

(57) **Zusammenfassung**

Ein Reparaturset (10) zur Ausbildung eines Gelpads auf einem Sensorgehäuse (50) erlaubt eine Wiederverwendung eines demontierten Sensors bzw. Sensorgehäuses (50). Auf eine gereinigte Oberfläche (48) des Sensorgehäuses (50) wird eine Ausgangssubstanz, welche in einem Konfektionierungskörper (12) bevorratet ist, aufgebracht. Die Zweikomponenten-Ausgangssubstanz geht nach dem Auftragen auf das Sensorgehäuse (50) in einen gelartigen Zustand über und bildet ein Gelpad aus, welches als optisches Kopplungsmedium zwischen einer Scheibe und dem auf ihr aufgesetzten Sensorgehäuse (50) dient,

## Beschreibung

Die Erfindung betrifft ein gebrauchsfertiges Reparaturset zur Ausbildung eines Gelpads als optisches Kopplungsmedium zwischen einer Scheibe eines Fahrzeuges und einem Sensorgehäuse.

In Fahrzeugen werden optische Sensoren beispielsweise als Regen- und/oder Lichtsensoren eingesetzt. Dabei wird ein Sensorgehäuse an der Scheibe, in der Regel der Windschutzscheibe, des Fahrzeugs befestigt. Das Sensorgehäuse ist mit Hilfe eines durchsichtigen Klebebandes oder einer entsprechenden Halterung an der Scheibe befestigt. Durch die Krümmung der Scheibe entsteht ein Hohlraum zwischen der Scheibeninnenseite und der Stirnfläche des Sensorgehäuses, wobei diesen Hohlraum ein von dem optischen Sensor ausgesandter bzw. empfangener Infrarotlichtstrahl durchqueren muss. Der Hohlraum und das Material der Scheibe weisen unterschiedliche Brechungsindizes auf, was sich störend auf den Durchtritt des Infrarotstrahls und folglich auf die Funktionalität des Sensors auswirkt.

Um derartige Beeinträchtigungen zu vermeiden, wird in DE 198 04 165 A1 vorgeschlagen, ein optisches Kopplungsmedium zwischen der Scheibe des Fahrzeuges und dem Sensorgehäuse auszubilden. Das Kopplungsmedium ist dabei ein Gelpad, welches vor Montage des Sensors bzw. des Sensorgehäuses auf dieses aufgebracht wird. Als Material wird meistens ein farbloses Silikon-Gel gewählt. Das Gel bzw. das Gelpad härtet nach der Montage nicht vollständig aus, wodurch Spannungen zwischen dem Sensorgehäuse und der Scheibe vermieden werden. Es ist darüber hinaus möglich, das Sensorgehäuse durch Beimischung eines Klebstoffes direkt mittels des Gelpads auf die Scheibe aufzukleben.

Aus DE 10 2004 048 434 A1 ist ein als optisches Kopplungsmedium dienendes Gelpad bekannt geworden, welches dauerhaft fest mit der Oberfläche des Sensorgehäuses verbunden ist und keine bzw. nur eine schwache Verbindung mit der Scheibe ausbildet. Auf diese Weise wird eine gute Lösbarkeit des Gelpads von der Scheibe bei Abnahme des Sensorgehäuses sichergestellt. Bei Abnahme des Sensorgehäuses von der Scheibe, beispielsweise in Zusammenhang mit einem Austausch der Scheibe, können dennoch Beschädigungen und sogar ein Zerreißen des Geldpads auftreten. Eine erneuter Einsatz bzw. Einbau des Sensorgehäuses ist nur schwer möglich.

Der Erfindung liegt die Aufgabe zugrunde, bei einer Beschädigung und/oder Ablösung des Gelpads von einem Sensorgehäuse in kostengünstiger und schneller Weise ein wiedereinbaufähiges Sensorgehäuse bereitzustellen und dabei eine einfache Handhabung sicherzustellen.

Die Aufgabe wird erfindungsgemäß gelöst durch ein gebrauchsfertiges Reparaturset zur Ausbildung eines Gelpads als optisches Kopplungsmedium zwischen einer Scheibe eines Fahrzeuges und einem Sensorgehäuse, umfassend einen Konfektionierungskörper, der eine Ausgangssubstanz für das Kopplungsmedium enthält und Mittel zum Aufbringen der Ausgangssubstanz auf das Sensorgehäuse aufweist.

Mit Hilfe der in dem Reparaturset aufgenommenen Ausgangssubstanz kann ein neues Gelpad auf dem Sensorgehäuse ausgebildet werden. Es ist jedoch auch denkbar, ein bei Abnahme des Sensorgehäuses zerstörtes Gelpad wieder zu einem vollständigen Gelpad zu ergänzen. Somit kann, insbesondere beim Scheibenwechsel, auf einen Austausch des Sensors, welcher ein vergleichsweise teures elektronisches Bauteil darstellt, verzichtet werden. Die Ausgangssubstanz ist in der Regel fließfähig, kann jedoch auch ein Feststoff, wie ein Granulat, sein.

Typischerweise enthält die Ausgangssubstanz ein kautschukartiges Material, beispielsweise Silikon, und ist, wie das aus ihr gebildete Gelpad, transparent.

Das erfindungsgemäße Reparaturset stellt eine unabhängige Einheit zur Wiederherstellung eines einbaufähigen Sensorgehäuses dar und ist typischerweise zum einmaligen Gebrauch ausgelegt. Der Konfektionierungskörper besteht zweckmäßigerweise aus einem Kunststoff und ist beispielsweise als Tube ausgeführt. Die Kraft, um die Ausgangssubstanz aus dem Konfektionierungskörper auf das Sensorgehäuse zu übertragen, wird typischerweise von einem Benutzer des Reparatursets aufgebracht, beispielsweise durch Zusammendrücken einer Tube. Aufgrund seiner geringen Dimensionen kann das erfindungsgemäße Reparaturset leicht transportiert und bevorratet werden.

In einer bevorzugten Ausführungsform des erfindungsgemäßen Reparatursets ist die Menge der Ausgangssubstanz derart gewählt, dass das auf der Ausgangssubstanz entstehende Gelpad das freie Volumen zwischen dem auf die Scheibe aufgesetzten Sensorgehäuse und der Scheibe ausfüllt. Auf diese Weise wird ein Ab- bzw. Bemessen der benötigten Menge an Ausgangssubstanz entbehrlich. Das Innenvolumen des Konfektionierungskörpers ist zweckmäßigerweise an die Menge der Ausgangssubstanz angepasst, sodass die Ausgangssubstanz ohne Lufteinschlüsse in dem Konfektionierungskörper gelagert werden kann. Das aus der Ausgangssubstanz gebildete Gelpad liegt vollflächig auf einer entsprechenden Oberfläche des Sensorgehäuses auf und passt sich aufgrund seiner Elastizität an die Krümmung der Scheibe an. Bei einem Ausfüllen des freien Volumens durch das Gelpad bzw. das optische Kopplungsmedium wird eine größtmögliche Funktionalität eines in dem Sensorgehäuse aufgenommenen optischen Sensors erzielt.

In einer weiteren bevorzugten Ausführungsform der Erfindung ist die Ausgangssubstanz aus zwei oder mehreren Komponenten zusammengesetzt und der Konfektionierungskörper weist für jede Komponente der Ausgangssubstanz jeweils eine separate Kammer auf. Die einzelnen Komponenten werden getrennt voneinander im Reparaturset bevorratet und bedarfabhängig zur Ausbildung eines Zwei- oder Mehrkomponentengels miteinander vermengt. Ein derartiges Reparaturset kann über eine längere Zeit hinweg gelagert bzw. bevorratet werden.

In einer bevorzugten Weiterbildung dieser Ausführungsform sind die einzelnen Kammern jeweils nahezu vollständig mit der entsprechenden Komponente gefüllt und die Volumina der einzelnen Kammern sind entsprechend dem Mischungsanteil der jeweiligen Komponente gewählt. Ein zusätzliches Dosieren bzw. Abmessen der einzelnen Komponenten ist somit entbehrlich und die Handhabung des erfindungsgemäßen Reparatursets weiter vereinfacht.

Vorteilhafterweise liegen die Komponenten im Konfektionierungskörper in dünnflüssiger Phase vor. Hierdurch wird ein gutes Vermischen der Komponenten sowie ein erleichtertes Auftragen auf das Sensorgehäuse erreicht. Nach Auftragen der Komponenten auf das Sensorgehäuse binden diese ab und gehen von der dünn- in eine zähflüssige Phase über. Die Warte- bzw. Abbindezeit beträgt typischerweise 30 bis 40 Minuten. Es ist jedoch auch denkbar, dass die Komponenten nach Austritt aus dem Konfektionierungskörper zunächst miteinander vermengt bzw. vermischt werden und anschließend auf das Sensorgehäuse aufgebracht werden.

Weiter ist es vorteilhaft, dass der Konfektionierungskörper einen mit den einzelnen Kammern verbundenen bzw. verbindbaren, bevorzugt statischen Mischer aufweist, und dass die Komponenten der Ausgangssubstanz vor Austritt aus dem Konfektionierungskörper durch den Mischer hindurch bewegbar sind. In dieser Ausführungsform tritt ein Komponentengemisch aus dem Konfektionierungskörper aus und kann unmittelbar auf das Sensorgehäuse aufgebracht werden. Ein externes Vermischen, mit anderen Worten außerhalb des Konfektionierungskörpers, ist entbehrlich und somit die Handhabung des erfindungsgemäßen Reparatursets weiter vereinfacht.

An der Austrittsstelle des Konfektionierungskörpers für die Ausgangssubstanz ist bevorzugterweise ein entfernbarer Verschluss vorgesehen. Durch den Verschluss, beispielsweise eine Kappe, wird die in dem Konfektionierungskörper beinhaltete Ausgangssubstanz frei von äußeren Einflüssen gehalten. Die Kammern mit den einzelnen Komponenten der Ausgangssubstanz weisen zweckmäßigerweise einen einzigen Verschluss an einer gemeinsamen Austritts- bzw. Anschlussstelle auf.

An der Austrittsstelle für die Ausgangssubstanz ist vorteilhafterweise eine im Wesentlichen trichterförmige Spitze und/oder Tülle ausgebildet oder anschließbar, die als statischer Mischer wirkt. Die Komponenten werden unmittelbar nach Austritt aus den jeweiligen Kammern miteinander vermischt. Die Spitze erleichtert das Auftragen des Komponentengemischs bzw. der Ausgangssubstanz auf eine Oberfläche des Sensorgehäuses.

Der Konfektionierungskörper ist bevorzugt als Spritze ausgebildet. Eine Spritze erleichtert die Bedienung des erfindungsgemäßen Reparatursets, da sie von einem Benutzer in einer Hand gehalten und bedient werden kann.

Die Erfindung umfasst weiter ein Verfahren zur Ausbildung eines als Kopplungsmedium zwischen einem Sensorgehäuse und einer Scheibe wirkenden Gelpads unter Verwendung des erfindungsgemäßen Reparatursets, wobei in einem ersten Verfahrensschritt eine dem Einbauraum für das Gelpad zugeordnete Oberfläche des Sensorgehäuses gereinigt wird, in einem zweiten Verfahrensschritt die Ausgangssubstanz für das Gelpad auf die Oberfläche des Sensorgehäuses aufgebracht wird und in einem dritten Verfahrensschritt die Umwandlungszeit der Ausgangssubstanz aus der flüssigen Phase in einen gelartigen Zustand abgewartet wird. Die Oberfläche des Sensorgehäuses wird zunächst von Gelrückständen eines bisherigen, nicht wieder einsatzfähigen Gelpads befreit. Die Reinigung erfolgt unter Zuhilfenahme von mechanischen und chemischen Reinigungsmitteln. Danach wird die in der Regel flüssige Ausgangssubstanz bzw. das Komponentengemisch auf die Oberfläche des Sensorgehäuses aufgebracht, d.h., aufgetropft, aufgegossen oder aufgestrichen. Anschließend finden Umwandlungsprozesse, insbesondere chemische Reaktionen zwischen den Komponenten, statt, wodurch das Komponentengemisch in einen gelartigen Zustand übergeht und auf diese Weise ein Gelpad ausbildet. Die Umwandlungszeit hängt von den gewählten Stoffen bzw. Stoffgemischen ab und kann gegebenenfalls durch Temperatureinwirkungen und/oder entsprechende Bestrahlungen verkürzt werden.

In einer bevorzugten Variante des erfindungsgemäßen Verfahrens wird das Sensorgehäuse vor dem ersten Verfahrensschritt von einer ersten Scheibe abgenommen und nach dem letzten Verfahrensschritt an einer zweiten Scheibe derart befestigt, dass das Gelpad ein optisches Kopplungsmedium zwischen der zweiten Scheibe und dem Sensorgehäuse bildet. Das Sensorgehäuse und ein darin aufgenommener Sensor kann bei Austausch der Scheibe bzw. des Fahrzeuges unter Einsatz des erfindungsgemäßen Verfahrens wieder verwendet werden und muss nicht durch einen neuen Sensor ersetzt werden. Das Material des Gelpads bzw. die Ausgangssubstanz ist an das Material der jeweiligen Scheibe, insbesondere deren Brechungsindex, angepasst. Die Menge und die Art der Ausgangssubstanz werden in Abhängigkeit des zu montierenden Sensorgehäuses und des Anbringungsortes, d.h., des auszufüllenden Volumens und des Materials der Scheibe gewählt. Es ist weiter vorteilhaft, unterschiedliche Reparatursets für entsprechende Einsatzzwecke bereitzustellen.

Weiter sind die erste und die zweite Scheibe bevorzugt Windschutzscheiben eines Fahrzeuges und in dem Sensorgehäuse ist ein optischer Sensor, insbesondere ein Licht- und/oder Regensensor aufgenommen. Die Anwendbarkeit des erfindungsgemäßen Reparatursets sowie des erfindungsgemäßen Verfahrens beschränkt sich nicht auf die vorgenannten Sensoren, sondern kann auch in der weiteren Fahrzeugsensorik, beispielsweise bei einem Einparksensor, verwendet werden. Darüber hinaus können erfindungsgemäß optische Sensoren an beliebigen Scheiben, beispielsweise von Gebäuden, angebracht werden. Es versteht sich, dass ein mit Hilfe des erfindungsgemäßen Reparatursets bzw. Verfahrens behandeltes bzw. montiertes Sensorgehäuse nach Abnahme erneut in erfindungsgemäßer Weise mit einem Gelpad versehen werden kann.

Weitere Vorteile und Merkmale der Erfindung ergeben sich aus der Beschreibung und den Figuren der Zeichnung. Ebenso können die vorstehend genannten und die noch weiter aufgeführten Merkmale erfindungsgemäß jeweils einzeln oder in beliebigen Kombinationen miteinander verwendet werden. Das erfindungsgemäße Reparaturset ist in einem Ausführungsbeispiel in den Figuren gezeigt. Die in den Figuren gezeigten Merkmale sind rein schematisch und nicht maßstäblich zu verstehen. Es zeigt:
- Figur 1: ein Ausführungsbeispiel des erfindungsgemäßen Reparatursets;
- Figur 2: das beispielhafte Reparaturset aus Figur 1 in Gebrauchsstellung und ein Sensorgehäuse; und
- Figur 3: eine Schnittdarstellung einer Scheibe mit einem an der Scheibe befestigten Sensorgehäuse.

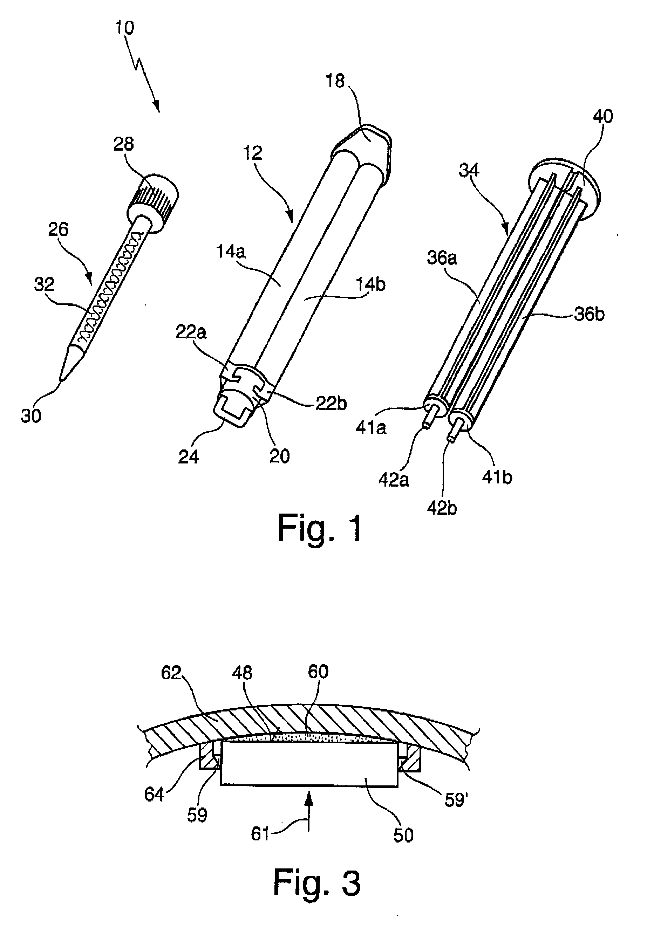

In Figur 1 ist ein Reparaturset 10 mit einem Konfektionierungskörper 12 gezeigt. In röhrenförmigen Kammern 14a und 14b des Konfektionierungskörpers 12 ist jeweils eine Komponente einer Ausgangssubstanz für ein Kopplungsmedium bzw. für ein Gelpad aufgenommen. Entsprechend dem Mischungsverhältnis 1:1 der Komponenten sind beide Kammern 14a und 14b gleich groß. Am hinteren Ende der parallel zueinander angeordneten Kammern 14a und 14b ist eine Verbreiterung 18 an dem Konfektionierungskörper 12 ausgebildet. Am vorderen Ende der Kammern 14a und 14b ist jeweils eine Austrittsstelle für die entsprechende Komponente vorgesehen. Diese Austrittsstellen sind von einem Verschluss 20 verdeckt. Der Verschluss 20 wird mit Hilfe von Umgriffsabschnitten 22a und 22b ortsfest am Konfektionierungskörper 12 gehalten. Für ein erleichtertes Entfernen des Verschlusses 20 von dem Konfektionierungskörper 12 ist ein Griff 24 vorgesehen.

Nach Abnahme des Verschlusses 20 kann eine Tülle 26 mit Hilfe eines Anschlussstückes 28 am Konfektionierungskörper 12 befestigt werden. Die in der Figur als separates Bauteil gezeigte Tülle 26 läuft an ihrem freien Ende spitz zu und weist dort eine AustrittsöfFnung 30 auf. Im Innern der Tülle 26 erstreckt sich ein wendelartiges Mischelement 32, das einen statischen Mischer darstellt. In der Figur ist als weiteres zusätzliches Bauteil ein Schieber 34 gezeigt, welcher stabartige Verdrängungselemente 36a und 36b aufweist. Die Verdrängungselemente 36a und 36b weisen einen kreuzförmigen Querschnitt auf und sind an das Innere der Kammern 14a und 14b angepasst. Beide Verdrängungselemente 36a und 36b sind an einer Platte 40 befestigt und weisen an ihren Vorderseiten 41a und 41b jeweils einen Stift 42a und 42b auf. Der Schieber 34 wird an der Verbreiterung 18 in den Konfektionierungskörper 12 eingeführt, wobei die Stifte 42a und 42b in gummiartige Abschlusselemente (in der Figur nicht dargestellt) am rückseitigen Ende der Kammern 14a und 14b eingreifen.

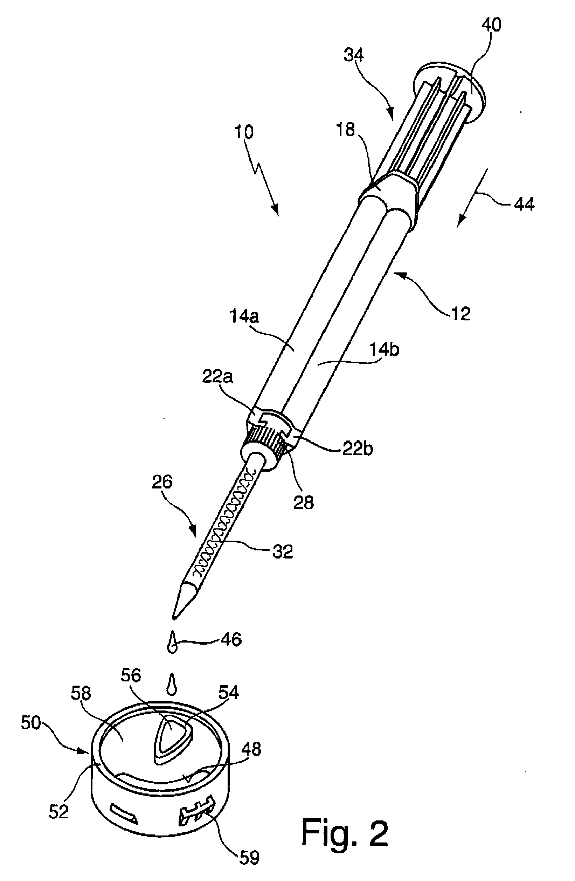

In Figur 2 ist das erfindungsgemäße Reparaturset 10 in Gebrauchsstellung dargestellt. In den als Spritze ausgeführten Konfektionierungskörper 12 ist der Schieber 34 in Einführrichtung 44 eingeführt. Durch Druck auf die Platte 40 wird der Schieber 34 in Einführrichtung 44 bewegt und die in den Kammern 14a und 14b verdrängte Ausgangssubstanz am vorderen Ende durch die Tülle 26 geführt. Die Tülle 26 ist über das Anschlussstück 28 und die Umgriffsabschnitte 22a und 22b am Konfektionierungskörper 12 befestigt. Die Komponenten der Ausgangssubstanz werden beim Durchlaufen der Tülle 26 bzw. des Mischelements 32 miteinander vermischt.

Das Komponentengemisch wird in Form von Tropfen 46 auf eine Oberfläche 48 eines Sensorgehäuses 50 aufgebracht. Das zylinderförmige Sensorgehäuse 50 weist an der stirnseitigen Oberfläche 48 eine äußere Umrandung 52 und eine innere Umrandung 54, welche eine Linse 56 umschließt, auf. Am äußeren Mantel des Sensorgehäuses 50 ist ein Rastelement 59 ausgebildet. Die auf die Oberfläche 48 aufgetropfte Ausgangssubstanz bildet dort einen Flüssigkeitsfilm 58. Die Menge der Ausgangssubstanz, d.h., die Volumina der Kammern 14a und 14b sind derart bemessen, dass bei komplettem Einführen des Schiebers 34 in den Konfektionierungskörper 12, d.h., beispielsweise bei Anschlag der Platte 40 an der Verbreiterung 18, der auf dem Sensorgehäuse 50 ausgebildete Flüssigkeitsfilm 58 die Oberfläche 48 vollständig bedeckt. Die miteinander vermischten Komponenten gehen anschließend in einen gelartigen Zustand über und bilden somit ein Gelpad aus.

In Figur 3 ist dargestellt, wie das Sensorgehäuse 50 mit einem Gelpad 60 in Montagerichtung 61 auf eine Scheibe 62 aufgesetzt ist. An der Scheibe 62 ist eine ringförmige Halterung 64 angeklebt, in welche das Sensorgehäuse 50 mit Hilfe von Rastelementen 59 und 59' gehalten ist. Das Gelpad 60 bedeckt die Oberfläche 48 des Sensorgehäuses 50 vollständig und füllt das Volumen zwischen dem Sensorgehäuse 50 und der Scheibe 62 aus. Das Gelpad 60 passt sich dabei aufgrund seiner Elastizität an die Krümmung der Scheibe 62 an.

Ein Reparaturset 10 zur Ausbildung eines Gelpads auf einem Sensorgehäuse 50 erlaubt eine Wiederverwendung eines demontierten Sensors bzw. Sensorgehäuses 50. Auf eine gereinigte Oberfläche 48 des Sensorgehäuses 50 wird eine Ausgangssubstanz, welche in einem Konfektionierungskörper 12 bevorratet ist, aufgebracht. Die Zweikomponenten-Ausgangssubstanz geht nach dem Auftragen auf das Sensorgehäuse 50 in einen gelartigen Zustand über und bildet ein Gelpad 60 aus, welches als optisches Kopplungsmedium zwischen einer Scheibe 62 und dem auf ihr aufgesetzten Sensorgehäuse 50 dient.

## Patentansprüche

1. Gebrauchsfertiges Reparaturset (10) zur Ausbildung eines Gelpads (60) als optisches Kopplungsmedium zwischen einer Scheibe (62) eines Fahrzeuges und einem Sensorgehäuse (50),
umfassend einen Konfektionierungskörper (12), der eine Ausgangssubstanz für das Kopplungsmedium enthält und Mittel zum Aufbringen der Ausgangssubstanz auf das Sensorgehäuse (50) aufweist.

2. Reparaturset nach Anspruch 1, **dadurch gekennzeichnet, dass** die Menge der Ausgangssubstanz derart gewählt ist, dass das aus der Ausgangssubstanz entstehende Gelpad (60) das freie Volumen zwischen dem auf die Scheibe (62) aufgesetzten Sensorgehäuse (50) und der Scheibe (62) ausfüllt.

3. Reparaturset nach Anspruch 1 oder 2, **dadurch gekennzeichnet, dass** die Ausgangssubstanz aus zwei oder mehreren Komponenten zusammengesetzt ist, und dass der Konfektionierungskörper (12) für jede Komponente der Ausgangssubstanz jeweils eine separate Kammer (14a, 14b) aufweist.

4. Reparaturset nach Anspruch 3, **dadurch gekennzeichnet, dass** die einzelnen Kammern (14a, 14b) jeweils nahezu vollständig mit der entsprechenden Komponente ausgefüllt sind, und dass die Volumina der einzelnen Kammern (14a, 14b) entsprechend dem Mischungsanteil der jeweiligen Komponente gewählt sind.

5. Reparaturset nach Anspruch 3 oder 4, **dadurch gekennzeichnet, dass** die Komponenten im Konfektionierungskörper (12) in dünnflüssiger Phase vorliegen.

6. Reparaturset nach einem der Ansprüche 3 bis 5, **dadurch gekennzeichnet, dass** der Konfektionierungskörper (12) einen mit den einzelnen Kammern (14a, 14b) verbundenen bzw. verbindbaren, bevorzugt statischen Mischer (32) aufweist, und dass die Komponenten der Ausgangssubstanz vor Austritt aus dem Konfektionierungskörper (12) durch den Mischer (32) hindurchbewegbar sind.

7. Reparaturset nach einem der vorhergehenden Ansprüche, **dadurch gekennzeichnet, dass** an einer Austrittsstelle des Konfektionierungskörpers (12) für die Ausgangssubstanz ein entfernbarer Verschluss (20) vorgesehen ist.

8. Reparaturset nach Anspruch 7, **dadurch gekennzeichnet, dass** an der Austrittsstelle für die Ausgangssubstanz eine im Wesentlichen trichterförmige Spitze und/oder eine Tülle (26) ausgebildet oder anschließbar ist, die als statischer Mischer wirkt.

9. Reparaturset nach einem der vorhergehenden Ansprüche, **dadurch gekennzeichnet, dass** der Konfektionierungskörper (12) als Spritze ausgebildet ist.

10. Verfahren zur Ausbildung eines als Kopplungsmedium zwischen einem Sensorgehäuse (50) und einer Scheibe (62) wirkenden Gelpads (60) unter Verwendung eines Reparatursets (10) nach einem der vorhergehenden Ansprüche, mit folgendem Verfahrensablauf:
(a) Reinigen einer dem Einbauraum für das Gelpad (60) zugeordneten Oberfläche (48) des Sensorgehäuses (50);
(b) Aufbringen der Ausgangssubstanz für das Gelpad (60) auf die Oberfläche (48) des Sensorgehäuses (50);
(c) Abwarten der Umwandlungszeit der Ausgangssubstanz aus der flüssigen Phase in einen gelartigen Zustand.

11. Verfahren nach Anspruch 10, **dadurch gekennzeichnet, dass** das Sensorgehäuse (50) vor Verfahrensschritt (a) von einer ersten Scheibe abgenommen wird und nach den Verfahrensschritten (b) und (c) an einer zweiten Scheibe (62) derart befestigt wird, dass das Gelpad (60) ein optisches Kopplungsmedium zwischen der zweiten Scheibe (62) und dem Sensorgehäuse (50) bildet.

12. Verfahren nach Anspruch 11, **dadurch gekennzeichnet, dass** die erste und die zweite Scheibe (62) Windschutzscheiben eines Kraftfahrzeuges sind, und dass in dem Sensorgehäuse (50) ein optischer Sensor, insbesondere ein Licht- und/oder Regensensor, aufgenommen ist.
